Europäisches Patentamt

European Patent Office

Office européen des brevets

(19)

(11) Veröffentlichungsnummer : **0 162 215**
**B1**

(12) **EUROPÄISCHE PATENTSCHRIFT**

(45) Veröffentlichungstag der Patentschrift :
09.08.89

(51) Int. Cl.⁴ : **C 04 B 7/24, C 04 B 7/43**

(21) Anmeldenummer : 85102874.6

(22) Anmeldetag : 13.03.85

(54) **Verfahren zur Entsorgung von brennbaren Abfällen.**

(30) Priorität : 27.03.84 DE 3411144
27.03.84 DE 3411148

(43) Veröffentlichungstag der Anmeldung :
27.11.85 Patentblatt 85/48

(45) Bekanntmachung des Hinweises auf die Patenterteilung : 09.08.89 Patentblatt 89/32

(84) Benannte Vertragsstaaten :
AT BE CH DE FR GB IT LI LU NL SE

(56) Entgegenhaltungen :
EP-A- 0 141 932
DE-A- 2 624 971
DE-A- 2 824 223
DE-A- 2 952 703
FR-A- 2 338 232
FR-A- 2 369 505

(73) Patentinhaber : Grisar, Alexander
Am Eiskeller 21
D-6500 Mainz-Finthen (DE)

(72) Erfinder : Grisar, Alexander
Am Eiskeller 21
D-6500 Mainz 21 (DE)
Erfinder : Deyhle, Henning
Am Teehaus 4
D-6229 Schlangenbad 5 (DE)

(74) Vertreter : Diehl, Hermann Dr. et al
Diehl & Glaeser, Hiltl & Partner Flüggenstrasse 13
D-8000 München 19 (DE)

Jouve, 18, rue St-Denis, 75001 Paris, France

EP 0 162 215 B1

## Beschreibung

Die Erfindung betrifft ein Verfahren zur Entsorgung von brennbaren Abfällen und zum Brennen von Zementklinker in einem Drehrohrofen mit Luftkühlung des Klinkers, wobei der Abfall getrennt verbrannt wird und das dabei entstehende Rauchgas Wärme an das Zementrohmehl abgibt.

Der seit Jahren steigende Anfall von Abfallstoffen, und zwar sowohl Hausmüll, als auch hausmüll-ähnlichem Gewerbemüll und Industrieabfall hat zu Problemen bei der Beseitigung bzw. Verwertung derartiger Abfälle geführt. Der größte Teil wird auch heute noch einer Deponierung zugeführt, wodurch die Umwelt jedoch in starkem Maße belastet wird.

Daneben gibt es eine Reihe von Verfahren, insbesondere Hausmüll oder hausmüllähnlichen Gewerbemüll durch Selektierung wieder aufzubereiten, zu kompostieren und/oder einfach zu verbrennen. Hierdurch kann zwar das Deponievolumen vermindert werden, die Verfahren sind jedoch kostenintensiv und können sich schädlich auf die Umwelt auswirken. Bei den bekannten Hausmüllverbrennungsverfahren können sich polychlorierte Dibenzodioxine und Dibenzofurane bilden. Bei den bekannten Kompostierungsverfahren entsteht ein schwermetallhaltiges Produkt.

Es hat verschiedene Versuche gegeben, die Entsorgung und Verwertung von brennbaren Abfällen mit der Herstellung verkaufsfähiger Produkte zu kombinieren.

So ist die Entsorgung und Verwertung von brennbaren Abfällen bei der Herstellung von Zementklinker, solange es sich um verhältnismäßig geringe Abfallmengen handelt, Stand der Technik.

Aus der DE-PS 26 24 971 ist ein Verfahren zur Verwertung industrieller Abfälle mit einem Gehalt an brennbaren Substanzen in Brennprozessen zur Herstellung von Zement bekannt, bei dem die Abfälle so mit dem Brenngut in Berührung gebracht werden, daß es die bei der Verbrennung oder Zersetzung der Abfälle entstehenden anorganischen Bestandteile der Abfälle aufnimmt. Der Abfallverwertung sind bei diesem Verfahren insoweit Grenzen gesetzt, als das Brenngut ohne Qualitätseinbußen nur beschränkte Mengen der Abfallasche aufnehmen kann. Die Erzeugung von Zementklinker erfordert nämlich eine definierte chemische Zusammensetzung des Produktes, die in relativ engen Grenzen zu halten ist. Schwankungen der chemischen Zusammensetzung des Brenngutes sind sowohl für das Verfahren als auch für das Produkt nur in sehr begrenztem Maße tolerierbar. Bei der Aufgabe von Abfällen ist deshalb die chemische Zusammensetzung des Zementrohmehls auf den Aschegehalt des brennbaren Abfalls einzustellen. Handelt es sich jedoch um Abfälle, deren Aschegehalt merklichen Schwankungen unterworfen ist, und/oder deren Asche eine von Zementrohmehlmaterialien sehr verschiedene chemische Zusammensetzung aufweist, so können nur geringe Mengen an brennbaren Abfällen eingebracht werden.

Die einsetzbare Menge an brennbarem Abfall ist bei dem bekannten Verfahren umso geringer, je höher und ungleichmäßiger der Aschegehalt ist, je stärker die chemische Zusammensetzung dieser Asche schwankt, je mehr die Zusammensetzung dieser Asche von der erstrebten Klinkerzusammensetzung abweicht und je weniger reine Korrekturmaterialien zur Verfügung stehen, um den unerwünschten Einflüssen entgegenzuwirken. Insoweit haben sich in der Praxis Grenzen der zugesetzten Abfallmengen zwischen etwa 0,05 bis 0,10 kg/kg Zementklinker ergeben.

Es sind auch Versuche gemacht worden, größere Abfallmengen einzusetzen.

So ist ein Verfahren bekannt, bei dem der Müll in mehrere Fraktionen aufgeteilt und lediglich eine aschearme und heizwertreiche Fraktion dem Brennofen für den Zementklinker aufgegeben wird. Bei solchen Verfahren können zwar, bedingt durch den geringeren Aschegehalt, größere Mengen an Abfall eingesetzt werden als bei der Verwendung eines nicht aufbereiteten Mülls, der Aschegehalt ist aber für die Beigabe großer Mengen bei der Klinkerherstellung immer noch zu hoch. Ferner fallen bei der Vorsortierung erhebliche Mengen von aschereichen Bestandteilen an, die anderweitig entsorgt werden müssen. Nachteilig ist ferner die kostenintensive Aufbereitung.

Daneben ist aus der DE-OS 27 48 510 ein Verfahren zur Verwertung von Abfallstoffen mit brennbaren Bestandteilen bei der Herstellung von Zementen bekannt, bei dem die brennbaren Abfälle entgast und die so entstandenen Pyrolysegase im Ofensystem für den Zementklinker als Brennstoff eingesetzt werden. Die bei der Pyrolyse anfallende Restfraktion enthält jedoch noch brennbare Bestandteile, so daß die wärmewirtschaftliche Verwertung nur partiell ist. Die Pyrolyse inhomogener Abfälle ist allgemein auf große technische Schwierigkeiten gestoßen, so daß sich entsprechende Verfahren in der Praxis nicht durchgesetzt haben.

Durch die DE-PS 27 02 048 ist ein Verfahren zur Herstellung von Portlandzement bekannt, bei dem Abfall in einer Zone außerhalb des Drehofens einerseits zu einem gasförmigen nicht verbrennbaren Produkt und andererseits zu Asche verbrannt wird und das gasförmige Produkt den Abgasen des Drehofens zugemischt wird, während sich diese im Kontakt mit dem eingesetzten kalkhaltigen Material befinden und wobei wenigstens ein Teil der Asche mit in den Klinker eingebaut wird. Ein großer Teil der Wärme dieses Abgases kann jedoch wegen der relativ geringen Temperatur der Gase nicht für die Calcinierung des Rohmehls genutzt werden. Dadurch ergibt sich zwangsläufig eine Verminderung des Wirkungsgrades. Eine wesentliche Einsparung an konventionellen Brennstoffen bei der Zementherstellung kann nicht erreicht werden. Da die Verbrennungsgase des Drehrohrofens und der Zone gemeinsam abgeführt werden, ist es nicht möglich, die jeweiligen Verbrennungvorgänge unabhängig voneinander zu steuern, so daß sich unkontrollierbare Betriebszustände mit entsprechenden negativen Auswirkungen auf Klinkerqualität und Emissionen ergeben. Bedingt durch die relativ niedrigen Brenntemperaturen in der Zone und die Instabilität des Prozesses können sich bei entsprechender Zusammensetzung der Abfallstoffe Dioxine und/oder Furane bilden. Bei der beschriebenen Anordnung ist keine getrennte Schadstoffabführung vorgesehen. Flüchtige Schwermetalle werden deshalb emittiert. Darüber hinaus wird Chlor im Kreislauf geführt und damit wiederholt mit den Rauchgasen der Müllverbrennung in Kontakt gebracht. Bei Anwesenheit von phenolischen Verbindungen in den Rauchgasen kann dies zur Bildung von polychlorierten Dibenzodioxinen und Dibenzofuranen führen.

Sämtliche bekannten Verfahren sind somit entweder mit dem Nachteil behaftet, daß, bezogen auf die Menge des erzeugten Klinkers, nur geringe Abfallmengen eingesetzt werden können, oder, daß bei Einsatz größerer Abfallmengen, infolge der geringen Verbrennungstemperaturen nur eine geringe wärmewirtschaftliche Verwertung des Abfalls beim Brennprozess der Zementherstellung möglich ist und die Gefahr besteht, daß sich toxische organische Verbindungen bilden.

Mit der Erfindung soll ein Verfahren zur Herstellung von Zementklinker zur Verfügung gestellt werden, bei dem sowohl eine ökologisch unbedenkliche Entsorgung großer Mengen brennbarer Abfallstoffe als auch deren wärmewirtschaftliche Nutzung für die Calcinierung ermöglicht wird.

Gegenstand der Erfindung ist ein Verfahren zur Entsorgung von brennbaren Abfällen bei der Herstellung von Zementklinker durch Vorwärmung und teilweise Calcinierung des Zementrohmehls in einem Vorwärmer, Brennen in einem Drehrohrofen und anschließende Luftkühlung des Klinkers, wobei der Abfall getrennt verbrannt wird und das dabei entstehende Rauchgas Wärme an das Zementrohmehl abgibt, welches dadurch gekennzeichnet ist, daß der Verbrennung des Abfalls heiße Abluft der Klinkerkühlung zugeführt und dadurch bei der Verbrennung Rauchgas mit einer Temperatur von 1 000 bis 1 400 °C erzeugt wird, mit dem das Zementrohmehl calciniert wird, und daß die Schlacke der Abfallverbrennung getrennt abgezogen wird.

Unter « Calcinierung » bzw. « Entsäuerung » wird im Rahmen dieser Erfindung die Dekarbonatisierung des Calziumkarbonates des Zementrohmehls zu Calziumoxid und Kohlendioxid verstanden, wobei letzteres in die Gasphase übergeht.

Unter erfindungsgemäß zu entsorgenden brennbaren Abfällen werden alle Abfallarten (Kategorien I, II und III der Informationsschrift « ABFALLARTEN », herausgegeben von der Ländergemeinschaft Abfall in Zusammenarbeit mit dem Bundesminister des Innern) verstanden, die eine brennbare Fraktion enthalten, insbesondere Hausmüll und hausmüllähnliche Abfälle, Sonderabfälle aus Industrie und Gewerbe, landwirtschaftliche Abfälle, Klärschlämme, Autoshredder sowie Sonderabfälle aus dem medizinischen und pharmazeutischen Bereich.

Das erfindungsgemäße Verfahren kommt bevorzugt zur Anwendung für relativ aschereiche und in der Zusammensetzung schwankende, große Abfallaufkommen, wie z. B. Hausmüll, inklusive Sperrmüll und hausmüllähnliche Gewerbeabfälle.

Unter dem « Vorwärmer » werden im Rahmen dieser Erfindung bekannte Einrichtungen zur Vorwärmung und Calcinierung des Zementrohmehls verstanden, wie z. B. Schwebegaswärmetauscher mit oder ohne Vorcalcinator, Rostvorwärmer oder Schachtvorwärmer.

Zur Lösung der gestellten Aufgabe hat es sich als besonders vorteilhaft erwiesen, den Abfall nicht nur in einer von der Klinkerbrennanlage getrennten Einheit zu verbrennen, sondern den Verbrennungsvorgang des Abfalls mit heißer Abluft aus der Kühlung des Zementklinkers zu bewirken. Die Zuführung heißer Luft aus dem Klinkerkühler eröffnet die Möglichkeit der Verbrennung bei hohen Temperaturen mit einem relativ geringen Luftüberschuß, wodurch ein besonders heißes Rauchgas aus der Abfallverbrennungsanlage gewonnen werden kann. Die Anwendung des erfindungsgemäßen Verfahrens ermöglicht es, der Abfallverbrennunganlage Rauchgas im Temperaturbereich von 1 000 bis 1 400 °C zu entnehmen, wobei die Beißluftzufuhr aus dem Klinkerkühler und die Steuerung der Abfallverbrennungsanlage so geführt werden, daß Rauchgase mit einer Temperatur von vorzugsweise 1 150 bis 1 400 °C erzeugt werden. Bei der Verbrennung in diesem Temperaturbereich können sich keine polychlorierten Kohlenwasserstoffe bilden, selbst im Abfall vorhandene Dioxine und/oder Furane werden bei diesen Temperaturen zersetzt.

Die in der Abfallverbrennunganlage erreichbaren Rauchgastemperaturen hängen u. a. von der Temperatur der erfindungsgemäß genutzten Abluft der Klinkerkühlung ab, wobei sich ein Temperaturbereich dieser Kühlerabluft von 300 bis 800 °C als besonders vorteilhaft erwiesen hat.

Da die Abfallverbrennung mit Luftüberschuß gefahren wird, enthält das Rauchgas auch noch Sauerstoff bei außerordentlich hoher Temperatur, der für die Verbrennung von zusätzlichem Brennstoff in Gegenwart des zu kalzinierenden Rohmehls genutzt werden kann.

Das erfindungsgemäße Verfahren erfüllt dann in besonderer Weise die gestellte Aufgabe, wenn die Temperatur des bei der Abfallverbrennung entstehenden Rauchgases möglichst hoch ist, weil dann eine Wärmemenge eingebracht wird, die für eine nahezu vollständige Calcinierung des Zementrohmehls im Vorwärmer reicht.

In jedem Fall wird dafür gesorgt, daß man durch die Abfallverbrennung ein möglichst heißes Rauchgas erzeugt. Demgemäß soll auch die erforderliche Verbrennungsluft schon eine möglichst hohe Temperatur haben und die Abfallverbrennung erfolgt mit einem relativ geringen Luftüberschuß. Auch eine direkte oder indirekte Vortrocknung des Abfalls, insbesondere mit den Abgasen des Klinkerdrehofens, trägt zu hohen Rauchgastemperaturen bei.

Zur Optimierung des Wirkungsgrades des erfindungsgemäßen Verfahrens sowohl im Hinblick auf die Abfallentsorgungsmenge als auch auf deren wärmewirtschaftliche Nutzung zur Calcinierung des Zementrohmehls ist die eingesetzte spezifische Abfallmenge so zu wählen, daß genügend Rauchgase bei der Abfallverbrennung entstehen. In der Praxis kommen, in Abhängigkeit von dem Heizwert des Abfalls, spezifische Abfallmengen von bis zu 1 t Abfall/t Klinker zum Einsatz.

Durch Einleitung der Rauchgase des Abfallofens in den Vorwärmer wird das dort aufgegebene Zementrohmehl calciniert und das Gas auf etwa 850 °C abgekühlt. Das so abgekühlte Gas durchströmt weiterhin den Vorwärmer und heizt das Zementrohmehl auf. Bei Einsatz relativ großer Abfallmengen kann somit nahezu der gesamte Energiebedarf, der zur Entsäurerung des Zementrohmehls erforderlich ist, mit Wärme der Rauchgase der Abfallverbrennung gedeckt werden. Zur Zementklinkererzeugung ist somit der Einsatz von konventionellen Brennstoffen praktisch nur noch für die Erzeugung hoher Temperaturen an der Auslaufseite des Klinkerofens erforderlich.

Die Erfindung ermöglicht somit eine Einsparung an konventionellen Brennstoffen bis zu etwa 70 % gegenüber bekannten Klinkerbrennanlagen, die im wärmesparenden Trockensystem arbeiten.

Im Vorwärmer stellen sich dann Mengenverhältnisse von Abgas zu Zementrohmehl ein, die wesentlich höher sind als bei konventionellen Klinkerbrennanlagen. Der Vorwärmer muß daher bei dem erfindungsgemäßen Verfahren entsprechend größer als bei konventionellen Klinkerbrennanlagen dimensioniert werden.

Das erhöhte Mengenverhältnis von Abgas zu Zementrohmehl und damit ein Wärmeüberangebot des Abgases in Bezug auf die Vorwärmung des Zementrohmehls kann bei einem erfindungsgemäßen Verfahren sogar noch anderweitig genutzt werden.

Beispielsweise können Rekuperatoren in die Anlage eingebaut werden. So kann durch den Einbau eines Rohrsystems, durch das ein Trägermedium zur Aufnahme von Wärme fließt, in dem Vorwärmer, und zwar im Temperaturbereich unter 800 °C, Wärme gewonnen werden. Soll diese Restwärme nicht mehr verwertet werden, so kann beispielsweise Wasser im Temperaturbereich unter 800 °C eingedüst werden, um das Volumen dieses Gases zu reduzieren und es auf ein gewünschtes niedrigeres Temperaturniveau zu bringen.

Sofern erfindungsgemäß von einer Calcinierung (Entsäuerung) des Zementrohmehls durch die Rauchgase der Abfallverbrennung die Rede ist, so muß diese nicht unbedingt bereits vollständig im Vorwärmer, insbesondere dem Vorkalzinator, erfolgen, zumal dann bereits eine partielle Sinterung zu befürchten ist. Eine Restentsäuerung ist auch noch im Drehrohrofen für die Sinterung des Klinkers möglich.

Das erfindungsgemäße Verfahren ermöglicht auch den Einsatz von unaufbereitetem Abfall.

Um bei Schwankungen in der Zusammensetzung und Menge des Abfalls ein möglichst gleichbleibendes Rauchgas sowohl hinsichtlich seiner Temperatur, als auch seiner mittransportierten Festteilchen zu erreichen, sieht eine vorteilhafte Ausführungsform des erfindungsgemäßen Verfahrens vor, daß die Abfallverbrennung in einem Drehrohrofen durchgeführt wird. Dieser ist auch besser als andere bekannte Verbrennungseinrichtungen den ungewöhnlich hohen Verbrennungstemperaturen der Abfallverbrennung gewachsen.

Das Verbrennungsaggregat für den Abfall wird zweckmäßigerweise unmittelbar an den Vorwärmer, insbesondere den Vorcalcinator, angeschlossen, und zwar so, daß das vorgewärmte Zementrohmehl unmittelbar mit den Rauchgasen aus dem Abfallofen in Berührung kommt, bevor diese die Wandungen und Einbauten des Vorwärmers erreichen. Durch diese unmittelbare Überleitung des Rauchgases können trotz der hohen Temperaturen der Abgase Kondensations- und Ansatzbildungen an den Wandungen von Leitungen und Einrichtungsteilen vermieden werden.

Wegen der hohen Verbrennungstemperaturen im Abfallofen wird die dabei entstehende Schlacke, in Abhängigkeit von ihrer chemischen Zusammensetzung, überwiegend als Schmelze ausgetragen. Das erlaubt eine Vergleichmäßigung der Zusammensetzung der Schlacke. Durch Abkühlung dieser Schmelze im Wasserbad entsteht ein glasiges Produkt, welches, in Abhängigkeit von seiner chemischen Zusammensetzung, mehr oder weniger latenthydraulische Eigenschaften aufweist.

Bedingt durch die hohen Brenntemperaturen im Abfallofen, werden nicht verbrennbare potentielle Schadstoffe weitgehend verflüchtigt, so daß eine laugungsresistente Schlacke entsteht, die gefahrlos deponiert oder verwertet werden kann. Somit hat das erfindungsgemäße Verfahren gegenüber konventionellen Abfallverbrennungsverfahren den weiteren Vorteil, daß eine erheblich schadstoffärmere, wenn nicht schadstofffreie, gleichmäßigere und mehr oder weniger latenthydraulische Schlacke erzeugt wird, die bei der Zementklinkermahlung dem Zement beigemischt werden kann. Ferner kann sie einer weiteren Verwertung oder Vermarktung zugeführt werden. Darüber hinaus besteht die Möglichkeit, zumindest einen gewissen Mengenanteil der Schlacke in Abhängigkeit von ihrer Zusammensetzung, als $SiO_2$- und/oder $Al_2O_3$-Träger bei der Herstellung des Zementrohmehls zu verwenden.

Ein wesentlicher Effekt bei der Durchführung des erfindungsgemäßen Verfahrens ist, daß bei der Verbrennung im Abfallofen freigesetzten Schwermetallionen und deren Verbindungen, Schwefeldioxid, Chloride, Fluoride usw. mit den Abgasen abgeführt und durch den Kontakt der Abgase mit dem Zementrohmehl von letzterem absorbiert werden.

Ein Teil dieser Stoffe wird somit in den Zementklinker eingebaut und dadurch unschädlich gemacht. Ein anderer Teil wird im Zementklinkerofen wieder verflüchtigt und zusammen mit dem Abgas des Klinkerofens abgeführt. Zumindest ein Teil dieser Klinkerofenabgase ist abzukühlen und zu entstauben. Die im Klinkerofen verflüchtigten Stoffe werden dadurch kondensiert, vom Klinkerofenabgasstaub absorbiert und im Entstauber ausgetragen. Ein Teil dieses Staubes, vorzugsweise eine abgetrennte grobe Kornfraktion, die erfahrungsgemäß einen niedrigen Schadstoffgehalt aufweist, kann zusammen mit dem Zementrohmehl wieder aufgegeben werden, ein Teil muß jedoch aus dem System entfernt werden. Ein eventueller restlicher Teil der Klinkerofenabgase kann in den Vorwärmer geleitet werden.

Durch die Auswahl desjenigen Mengenanteils der Abgase des Drehrohrofens, die abgekühlt und in den Entstauber geleitet werden, und durch Auswahl desjenigen Mengenanteils des Staubes, der aus dem Gesamtsystem abgeführt wird, läßt sich die anfallende Staubmenge und die Konzentration dieses Staubes an potentiellen Schadstoffen innerhalb gewisser Grenzen regulieren. Gegenüber konventionellen Abfallverbrennungsanlagen hat das erfindungsgemäße Verfahren somit nicht nur den Vorteil einer geringeren Emission an potentiellen Schadstoffen, ohne daß eine Rauchgaswäsche erforderlich ist, vielmehr fällt auch ein an Schadstoffen konzentrierterer Staub an. Entsprechend geringer sind die Staubmengen, die abzuführen sind.

Mit dem Staub wird das in das System eingebrachte Chlor, meist in Form von Alkalichlorid, separat ausgetragen. Damit wird sichergestellt, daß die Rauchgase der Müllverbrennung, die bei unvollständiger Verbrennung der im Müll vorhandenen Ligninbestandteile phenolische Verbindungen enthalten können, im Temperaturbereich unterhalb 400 °C nicht mit Chlor oder chlorhaltigen Verbindungen in Kontakt kommen und keine polychlorierten Dibenzodioxine und Dibenzofurane entstehen können.

Abgesehen von der schon erwähnten beachtlichen Einsparung an konventionellen Brennstoffen bei der Klinkerherstellung hat das erfindungsgemäße Verfahren den weiteren Vorteil, daß Klinkerkühlerabluft für die Verbrennung des Abfalls verwendet wird, wodurch die kostenaufwendige Entstaubung der Klinkerkühlerabluft, wie sie nach dem Stand der Technik erforderlich ist, entfällt oder die hierfür nötige Anlage zumindest kleiner ausgelegt werden kann.

Eine weitere Ausführungform der Erfindung sieht vor, einen Teil der Gas- oder Materialströme aus dem Vorwärmer oder, bezogen auf die Strömungsrichtung des Gases, nach dem Vorwärmer zu entnehmen und in den Klinkerofen zu leiten. Auf diese Weise können schadstoffhaltige Verbindungen, die bereits bei Temperaturen unterhalb 800 °C verflüchtigen, in den Zementklinker-Drehrohrofen geleitet und mit den Abgasen dieses Ofens abgekühlt und entstaubt werden. Die so kondensierten und vom Staub absorbierten Schadstoffe können dann mit diesen abgeführt werden. Um dies zu erreichen, ist es ferner möglich, einen Teilstrom der Abgase des Vorwärmers mit den Abgasen des Klinker-Drehrohrofens zusammenzuführen und diese gemeinsam abzukühlen und zu entstauben.

Eine weitere Ausführungsform der Erfindung sieht vor, bei der Verbrennung im Drehrohrofen für den Klinker die Verbrennungsluftzufuhr zumindest teilweise durch Zufuhr von reinem Sauerstoff oder durch Zufuhr einer mit Sauerstoff angereicherten Luft zu ersetzen. Dadurch kann die Abgasmenge im Zementklinkerdrehrohrofen reduziert werden. Es stellen sich geringere Gasgeschwindigkeiten im Ofen ein, so daß die Staubaufwirbelung und somit der Staubaustrag aus dem Klinkerofen geringer wird und die Abgaswärmeverluste reduziert werden. Außerdem wird für die Verbrennung im Drehrohrofen für den Klinker weniger Sekundärluft benötigt, so daß weitere bzw. heißere Klinkerkühlerabluft für die Abfallverbrennung und damit für die Kalzination des Rohmehls verwertet werden kann.

Schließlich sieht eine Ausführungsform der Erfindung vor, die Abfallverbrennung durch Sauerstoffzufuhr zu fördern. Dadurch kann die Abfallverbrennung bei noch höheren Temperaturen durchgeführt und somit die Wärme der Abfallverbrennung besser für die Kalzination des Zementrohmehls genutzt werden. Ferner führt die Sauerstoffzufuhr zu einer Verminderung der spezifischen Rauchgasmenge der Abfallverbrennung bzw. bei gegebener Rauchgasdurchsatzleistung zu einer Erhöhung der durchsetzbaren Abfallmenge.

Je nach zur Verfügung stehenden Abfallstoffen, ihrer Menge sowie der Qualität und Menge des aufgegebenen Zementrohmehls bietet das erfindungsgemäße Verfahren weitere Optimierungsmöglichkeiten durch spezielle Führung und Abzweigung der verschiedenen Gasströme. So können beispielsweise die Abgase des Zementklinker-Drehrohrofens oder ein Teil dieser Abgase zur Vortrocknung des Abfalls genutzt werden. Durch die Vortrocknung des Abfalls kann dann im eigentlichen Verbrennungsraum eine noch höhere Verbrennungstemperatur erreicht werden. Abgase des Klinkerofens können ebenfalls zur Calcinierung und Vorwärmung von Zementrohmehl in einem zweiten Vorwärmer genutzt werden. Teilmengen dieser Gase können auch in den Vorwärmer geführt werden, durch den die Rauchgase der Abfallverbrennung geleitet werden. Überschüssige Abgase aus dem Klinkerdrehrohrofen können aber auch beispielsweise für die Trocknung der Rohstoffe der Zementherstellung, für die indirekte Erhitzung von Verbrennungsluft und zur Erzeugung von Fernwärme oder Strom genutzt werden. Analog können Abgase des Vorwärmers, die in großen Mengen zur Verfügung stehen, wärmewirtschaftlich genutzt werden.

Weitere vorteilhafte Merkmale der Erfindung sind durch die weiteren Patentansprüche sowie die übrigen Beschreibungsunterlagen offenbart.

Anhand des beigefügten Fließschemas seien spezielle Ausführungsformen des erfindungsgemäßen Verfahrens erläutert.

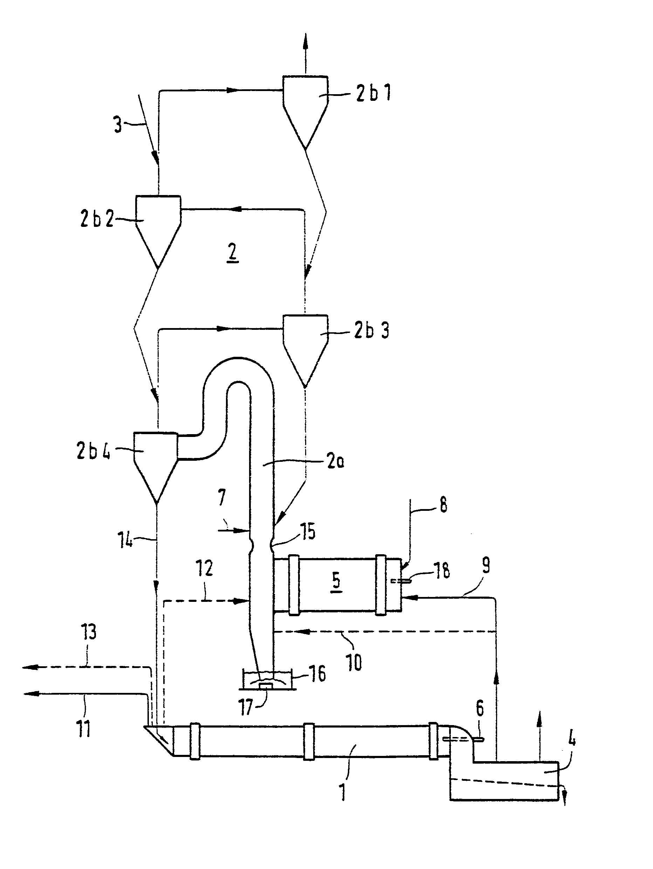

Die Zeichnung zeigt einen Drehrohrofen zum Klinkerbrennen (1), einen Zyklonvorwärmer (2), bestehend aus vier Zyklonenstufen (2b1, 2b2, 2b3 und 2b4) und einem Vorkalzinator (2a), einem Klinkerkühler (4) und einem Drehofen für die Abfallverbrennung (5) mit Abfallaufgabe (8) und Hilfsbrenner (18).

Der Klinkerofen (1) wird mit konventionellen Brennstoffen betrieben, die über den Brenner (6) aufgegeben werden. Bei (3) wird dem Vorwärmer Zementrohmehl in der Gasleitung aufgegeben, die die beiden obersten Zyklone (2b1) und (2b2) verbindet. Der Vorkalzinator (2a) ist direkt an den Abfallverbrennungsofen (5) angeschlossen, so daß das Rauchgas aus dem Abfallofen (5) unmittelbar mit dem aus dem Zyklon (2b3) stammenden vorgeheizten Rohmehl in Berührung kommt. Eine Verengung (15) des Querschnitts des Vorkalzinators sorgt dafür, daß das heiße Rohmehl vollständig vom Gasstrom mitgenommen wird. Um Schwankungen im Wärmeinhalt der Rauchgase des Abfallofens auszugleichen, kann eine direkte Brennstoffzufuhr (7) in den Vorkalzinator vorgesehen sein. Der Vorkalzinator (2a) mündet in seinem unteren Teil zur Abdichtung gegen die Atmosphäre in einem Wasserbad (16), in das die Schlacke aus dem Abfallofen fällt und von dort mit einer Schleppkette (17) ausgetragen wird.

Ein Teil der heißen Abluft aus dem Klinkerkühler (4) wird über eine Leitung (9) als Verbrennungsluft in den Abfallofen (5) geleitet. Ein weiterer Teil kann direkt über die Leitung (10) in den Vorkalzinator (2a) geleitet werden.

Das im Vorkalzinator (2a) weitgehend kalzinierte Zementrohmehl wird im Zyklon (2b4) abgeschieden und von dort über die Leitung (14) in den Klinkerofen (1) geführt.

Zumindest ein Teil der Klinkerofenabgase wird über die Leitung (11) abgeführt und in einer (nicht gezeigten) Anlage abgekühlt und entstaubt. Ein weiterer Teil der Klinkerofenabgase kann über eine Leitung (12) in den Vorkalzinator (2a), geführt und/oder zu anderweitigen Verwertungen abgeführt (13) werden. Eine nicht gezeigte Wassereindüsung kann in die Zyklone oder die sie verbindenden Gasleitungen des Zyklonvorwärmers (2) erfolgen.

## Patentansprüche

1. Verfahren zur Entsorgung von brennbaren Abfällen bei der Herstellung von Zementklinker durch Vorwärmung und teilweise Calcinierung des Zementrohmehls in einem Vorwärmer, Brennen in einem Drehrohrofen und anschließende Luftkühlung des Klinkers, wobei der Abfall getrennt verbrannt wird und das dabei entstehende Rauchgas Wärme an das Zementrohmehl abgibt, dadurch gekennzeichnet, daß der Verbrennung des Abfalls heiße Abluft der Klinkerkühlung zugeführt und dadurch bei der Verbrennung Rauchgas mit einer Temperatur von 1 000 bis 1 400 °C erzeugt wird, mit dem das Zementrohmehl calciniert wird, und daß die Schlacke der Abfallverbrennung getrennt abgezogen wird.

2. Verfahren nach Anspruch 1, dadurch gekennzeichnet, daß Rauchgas mit einer Temperatur von 1 150 bis 1 400 °C erzeugt wird.

3. Verfahren nach Anspruch 1 oder 2, dadurch gekennzeichnet, daß die für die Verbrennung des Abfalls entnommene Abluft der Klinkerkühlung eine Temperatur von 300 bis 800 °C hat.

4. Verfahren nach einem der Ansprüche 1 bis 3, dadurch gekennzeichnet, daß die Abfallverbrennung in einem Drehrohrofen durchgeführt wird.

5. Verfahren nach einem der Ansprüche 1 bis 4, dadurch gekennzeichnet, daß der Abfall unaufbereitet verbrannt wird.

6. Verfahren nach einem der Ansprüche 1 bis 5, dadurch gekennzeichnet, daß die Abgase des Drehrohrofens für den Zementklinker zumindest teilweise gekühlt und entstaubt werden und zumindest ein Teil des Staubes nicht in das System zurückgeführt wird.

7. Verfahren nach einem der Ansprüche 1 bis 6, dadurch gekennzeichnet, daß ein Teil der Abgase des Drehrohrofens für den Zementklinker zur Trocknung des Zementrohmehls, von Zusatzstoffen für die Zementherstellung, für die Calcinierung des Zementrohmehls und/oder anderweitig genutzt wird.

8. Verfahren nach einem der Ansprüche 1 bis 7, dadurch gekennzeichnet, daß den nach der Calcinierung anfallenden Gasen im Temperaturbereich unter 800 °C indirekt Wärme zur anderweitigen Nutzung entzogen wird.

9. Verfahren nach einem der Ansprüche 1 bis 7, dadurch gekennzeichnet, daß in die nach der Calcinierung anfallenden Gase im Temperaturbereich zwischen 400 und 800 °C Wasser eingedüst wird.

10. Verfahren nach einem der Ansprüche 1 bis 9, dadurch gekennzeichnet, daß die Schlacke der Abfallverbrennung als Schmelze in ein Wasserbad ausgetragen wird.

## Claims

1. A process for the disposal of combustible refuse in the manufacture of cement clinker by preheating and partly calcining the cement raw meal in a preheater, burning in a rotary kiln and subsequently air cooling the clinker, the refuse being incinerated separately and the flue gas obtained thereby transferring heat to the cement raw meal, characterized in that hot exhaust air of the clinker cooler is fed to the refuse incineration, and in that therewith flue gas having a temperature of from 1 000 to 1 400 °C is produced during the incineration with which the cement raw meal is calcined, and in that the slag of the refuse incineration is separately discharged.

2. A process according to claim 1 characterized in that flue gas having a temperature of from 1 150 to 1 400 °C is produced.

3. A process according to claim 1 or 2 characterized in that the exhaust air from the clinker cooling, withdrawn for the refuse incineration, has a temperature of from 300 to 800 °C.

4. A process according to any of claims 1 to 3 characterized in that the refuse incineration takes place in a rotary kiln.

5. A process according to any of claims 1 to 4 characterized in that the refuse is incinerated without previous processing.

6. A process according to any of claims 1 to 5 characterized in that the exhaust gases of the cement clinker rotary kiln are at least partly cooled and dedusted and at least part of the dust is not returned to the system.

7. A process according to any of claims 1 to 6 characterized in that part of the exhaust gases of the cement clinker rotary kiln is utilized for drying cement raw meal or additives for the cement manufacture for calcining cement raw meal and/or for other purposes.

8. A process according to any of claims 1 to 7 characterized in that heat is indirectly draw from the gas obtained after the calcining at a temperature range below 800°C and is utilized for other purposes.

9. A process according to any of claims 1 to 7 characterized in that water is sprayed into the gas obtained after the calcining at a temperature range of from 400 to 800 °C.

10. A process according to any of claims 1 to 9 characterized in that the slag of the refuse incineration is discharged as molten flow into a water bath.

## Revendications

1. Procédé d'élimination de déchets combustibles lors de la production de clinker de ciment avec préchauffage et calcination partielle de la poudre crue de ciment dans un préchauffeur, cuisson dans un four rotatif et refroidissement ultérieur par air du clinker, procédé au cours duquel les déchets sont incinérés séparément et les fumées ainsi générées cèdent de la chaleur à la poudre crue de ciment, caractérisé en ce que de l'air d'échappement chaud issu du refroidissement du clinker est amené à l'incinération des déchets et, par ce moyen, se produisent des fumées de l'incinération ayant une température entre 1 000 et 1 400 °C, avec lesquelles la poudre crue de ciment est calcinée, et en ce que le laitier issu de l'incinération des déchets est enlevé séparément.

2. Procédé selon la revendication 1, caractérisé en ce que se produisent des fumées d'une température allant de 1 150 à 1 400 °C.

3. Procédé selon la revendication 1 ou 2, caractérisé en ce que l'air d'échappement prélevé du refroidissement du clinker pour l'incinération des déchets a une température entre 300 et 800 °C.

4. Procédé selon l'une des revendications 1 à 3, caractérisé en ce que l'incinération des déchets est exécutée dans un four rotatif.

5. Procédé selon l'une des revendications 1 à 4, caractérisé en ce que les déchets sont incinérés sans traitement préalable.

6. Procédé selon l'une des revendications 1 à 5, caractérisé en ce que les gaz d'échappement du four rotatif pour le clinker de ciment sont au moins partiellement refroidis et dépoussiérés et en ce qu'au moins partiellement refroidis et dépoussiérés et en ce qu'au moins une partie de la poussière n'est pas recyclée au système.

7. Procédé selon l'une des revendications 1 à 6, caractérisé en ce qu'une partie du gaz d'échappement du four rotatif pour le clinker de ciment est utilisée pour le séchage de poudre crue du ciment, de substances d'addition pour la fabrication du ciment, pour la calcination de la poudre crue de ciment et/ou d'une autre manière.

8. Procédé selon l'une des revendications 1 à 7, caractérisé en ce que la chaleur est prélevée indirectement du gaz d'échappement de la calcination dans une gamme de température inférieure à 800 °C et est utilisée autrement.

9. Procédé selon l'une des revendications 1 à 7, caractérisé en ce que de l'eau est pulvérisée dans le gaz d'échappement de la calcination dans une gamme de températures entre 400 et 800 °C.

10. Procédé selon l'une des revendications 1 à 9, caractérisé en ce que le laitier issu de l'incinération des déchets est enlevé à l'état fondu dans un bain d'eau.